# EUROPÄISCHE PATENTSCHRIFT

(11) **EP 1 707 297 B1**
(45) Veröffentlichungstag und Bekanntmachung des Hinweises auf die Patenterteilung: **25.09.2013**
(21) Anmeldenummer: 05102508.8
(22) Anmeldetag: 30.03.2005
(51) Int. Cl.: B23K 9/29

(54) **Stromkontaktdüse aus Grafit und deren Verwendung beim Schutzgasschwei en und Schutzgaslöten**
Graphit contact nozzle and its use in a shielding gas welding and in a shielding gas brazing
Ajustage de contact en graphite utilisé dans le soudage et dans le brasage avec gaz de protection.

(43) Veröffentlichungstag der Anmeldung: 04.10.2006
(73) Patentinhaber: Grillo-Werke AG, D-47169 Duisburg (DE)
(72) Erfinder: Spriestersbach, Jochen, 47058, Duisburg (DE); Wisniewski, Jürgen, 46487, Wesel (DE); Prenger, Frank, 40885, Ratingen (DE)
(74) Vertreter: polypatent

(56) Entgegenhaltungen:
- EP-A- 0 447 630
- US-A- 5 278 392
- US-A- 6 137 079

## Beschreibung

Gegenstand der Erfindung ist eine Stromkontaktdüse zum Führen und Kontaktieren eines Schweißdrahtes zum Schutzgasschweißen oder Schutzgaslöten und deren Verwendung beim Schutzgasschweißen oder Schutzgaslöten von weichen Zusatzstoffen, wie es in dem Oberbegriff des Anspruchs 1 offenbart wird.

Diese Stromkontaktdüsen weisen einen Kanal auf, durch den der Schweißdraht geführt wird. Sie sind üblicherweise umgeben von einer Schutzgasdüse, wobei in dem Zwischenraum zwischen Schutzgasdüse und Stromkontaktdüse das Schutzgas geführt wird.

Üblicherweise sind solche Stromkontaktdüsen aus leitfähigen Metallen, beispielsweise Kupfer, hergestellt. Weiterhin sind aus dem Stand der Technik auch Stromkontaktdüsen bekannt, die aus keramischem Material bestehen, in dem ein elektrisch leitendes Material eingebettet ist. So beschreibt beispielsweise die DE 44 45 364 eine solche Stromkontaktdüse aus keramischem Material, wobei diese Stromkontaktdüse so ausgeführt ist, dass sie im Bereich des Kanals oder im Bereich der Wandung des Kanals aus elektrisch leitendem Material besteht. Der Vorteil einer solchen Stromdüse aus keramischem Material besteht darin, dass eine geringe Abnutzung im Bereich des Kanals auftritt und damit die Stromkontaktdüse länger verwendet werden kann.

Stromkontaktdüsen werden eingesetzt zum Schutzgasschweißen oder Schutzgaslöten von Werkstücken gleicher oder verschiedener Metalle oder Metalllegierungen, insbesondere im Fahrzeugbau. Im Fahrzeugbau und insbesondere im Automobilbau ist es üblich geworden, eine Vielzahl von Leichtmetallteilen zu verwenden, um das Gesamtgewicht der Karosserie zu verringern, was sich auf die Gesamtkraftstoff-Verbrauchseigenschaften des Kraftfahrzeuges positiv auswirkt. Hierbei werden häufig Metallteile aus Aluminium, Aluminium-Legierungen oder Magnesiumlegierungen eingesetzt. Inzwischen sind Fahrzeuge auf dem Markt, deren Karosserien zu mehr als der Hälfte aus diesen Materialien bestehen. Mit dieser Änderung für den Karosseriebau ist auch eine entsprechende Anpassung der Fügeverfahren des Standes der Technik notwendig geworden. So müssen jetzt auch Fügeverbindungen zwischen verschiedenen Metallen zur Verfügung gestellt werden und in einem industriellen Fertigungsverfahren ohne größere Komplikationen eingesetzt werden.

Für dieses Fügen, beispielsweise von Stahlblechen, insbesondere verzinkten Stahlblechen, werden das Schutzgasschweißen und das Schutzgaslöten eingesetzt. Diese Verfahren werden beispielsweise in der DIN 1910-2 beschrieben. Beim Metallschutzgasschweißen handelt es sich um ein Verfahren, bei dem mittels eines Lichtbogens, der zwischen einer von Schutzgas umströmten Drahtelektrode und dem Werkstück brennt, das Werkstück im zu verschweißenden Bereich aufgeschmolzen wird. Dabei kann die Drahtelektrode Schweißzusatzstoffe enthalten und muss auf den zu verschweißenden Werkstoff abgestimmt werden. Die zu verschweißenden Bereiche der Werkstücke werden so miteinander verbunden. Ein hierzu alternatives Verfahren ist das Metallschutzgaslöten, das sich vom Metallschutzgasschweißen dadurch unterscheidet, dass als Drahtelektrode ein niedriger als die zu verbindenden Grundwerkstoffe schmelzendes Lot eingesetzt wird, so dass der gesamte Vorgang bei niedrigen Temperaturen durchgeführt wird. Dieses Verfahren, das auch als MSG-Löten bezeichnet wird, hat sich zum Verbinden von verzinkten Feinblechen in der Automobilindustrie durchgesetzt. Es bietet vielerlei Vorteile, insbesondere höhere Prozesssicherheit, beste Qualität der Lötnähte und sehr gute Verbindungsfestigkeit sowie sehr gute Korrosionsbeständigkeit der verbundenen Metallteile. Als Schutzgase werden für dieses Verfahren Argon oder argonhaltige Gase eingesetzt. Diese Gasgemische können aktive Gase enthalten, die glattere Lötnähte und gute Nahtübergange zum Grundwerkstoff erzeugen können. Hierzu werden beispielsweise Gemische von Argon mit geringen Sauerstoffanteilen eingesetzt. Bei diesem Verfahren werden Stromkontaktdüsen eingesetzt, durch die der Schweißdraht geführt wird und eine Kontaktierung stattfindet.

Die bisher verwendeten Stromkontaktdüsen aus keramischem Material mit entsprechenden leitenden Bereichen, die meist aus Kupfer bestehen oder die verwendeten Kupferdüsen haben jedoch erhebliche Nachteile, insbesondere für die Anwendung in industriellen kontinuierlichen Prozessen mit weichen Zusatzwerkstoffen beispielsweise aus Zink oder Zinn. Zunächst besitzt Kupfer eine hohe Wärmedehnung von ungefähr 16 x 10⁻⁶ K⁻¹ Diese hohe Wärmedehnung führt dazu, dass sich die Bohrung, die zur Führung des Drahtes und zur Übertragung des Stromes beim Schweißen dient, aufgrund der Wärmeänderungen während des Schweißens in ihrem Durchmesser verändert. Wenn sich während des Schweißprozesses oder des Lötprozesses der Durchmesser der Bohrung der Düse durch die zunehmende Temperatur vergrößert, verändert sich der Abstand zwischen der Drahtoberfläche und der Bohrungswand und dadurch verändert sich der elektrische Übergangswiderstand. Dies führt zu einer ungleichmäßigen Stromübertragung und zur Störung des Prozesses. Wird der Bohrungsdurchmesser sehr eng gewählt, kann es weiterhin zum Verklemmen des Drahtes kommen. Aufgrund dieser Fehlerquellen kommt es zu Ungenauigkeiten beim Verschweißen und eine gleichmäßige Ausbildung der Schweißnaht wird erschwert.

Weiterhin nachteilig ist, dass auch die Stromübertragung durch die Stromkontaktdüse ungleichmäßig ist, weil der entsprechende Luftspalt zwischen Draht und Kanaloberfläche ungleichmäßig ist.

Ein weiterer Nachteil der bisher verwendeten Stromkontaktdüsen ist es, dass Spritzer und Ablagerungen des Lotmaterials an der Oberfläche der Bohrung haften und zu einem Verschweißen des Drahtes mit der Stromkontaktd üse führen können. In einem solchen Fall kann insbesondere weicher Schweißdraht nicht weiter durch die Stromkontaktdüse geführt werden und eine Unterbrechung des Prozesses und eine Reinigung der Stromkontaktdüse ist notwendig.

Die technische Aufgabe der Erfindung ist es daher, eine Stromkontaktdüse zur Verfügung zu stellen, die die oben beschriebenen Nachteile nicht aufweist, insbesondere eine geringere Wärmedehnung besitzt, eine gleichmäßige Stromübertragung ermöglicht, ein Klemmen des Drahtes in der Bohrung vermeidet und bei der Spritzer des Lotes an der Oberfläche der Stromdüse nicht haften und leicht ablösbar sind.

Die technische Aufgabe der Erfindung wurde gelöst durch eine Stromkontaktdüse gemäß dem Anspruch 1.

In einer bevorzugten Ausführungsform ist die Stromkontaktdüse dadurch gekennzeichnet, dass der Körper der Stromkontaktdüse 1 vollständig aus Grafit oder grafitähnlichem Bornitrit besteht.

Die Verwendung einer Stromkontaktdüse aus Grafitmaterial hat zunächst den Vorteil, dass Grafit aufgrund der erheblich geringeren Wärmedehnung von ungefähr 5 x 10 ⁻⁶ K ⁻¹ im Vergleich zu Kupfer dazu führt, dass die Bohrung, die zur Führung des Drahtes und zur Übertragung des Stromes dient, sehr eng toleriert werden kann und damit ein Klemmen des Drahtes beim Schweißen ausgeschlossen werden kann. Weiterhin wird auch die Stromübertragung durch den kleineren Durchmesser verbessert, weil wegen der geringeren Toleranz ein gleichmäßigerer Luftspalt vorhanden ist. Ein weiterer Vorteil ist, dass Spritzer des Lotmaterials an der Oberfläche des Grafitmaterials nicht haften und leicht ablösbar sind und damit den Schweißprozess nicht behindern.

Die erfindungsgemäße Stromkontaktdüse wird insbesondere verwendet zum Schutzgasschweißen oder Schutzgaslöten von zinkhaltigen und/oder zinnhaltigen Werkstoffen und Legierungen oder auch Werkstoffen auf Kupfer- und Aluminiumbasis. Die verwendeten Lotmaterialien besitzen im Vergleich zu konve n-tionell eingesetzten Werkstoffen, beispielsweise Stahl, die Eigenschaft, dass sie sehr weich sind und deshalb sehr empfindlich bei der Förderung von der Spule durch die Stromkontaktdüse hin zum verschweißenden Material sind. Es ist daher insbesondere bei diesen Materialien wichtig, dass kein Berühren des Drahtes in der Stromkontaktdüse auftritt, da ansonsten das Lotmaterial nicht kontinuierlich nachgeführt werden kann und damit ein kontinuierlicher Schweißprozess unmöglich ist. Weiterhin führt das ungleichmäßige Nachführen des Lotdrahtes zu einer ungleichmäßigen Ausbildung der Schweißnaht. Dies ist im industriellen kontinuierlichen Verfahren nicht tolerierbar. Durch den Einsatz der erfindungsgemäßen Stromkontaktdüse, die aus Grafit besteht, ist ein kontinuierlicher, gleichmäßiger Schweißprozess in einem industriellen Verfahren erst möglich.

In einer bevorzugten Ausführungsform ist der Körper (1) der Stromkontaktdüse in seinem unteren Bereich von einen, sich nach unten hin kegelförmig verjüngenden Abschnitt (5) gebildet. In bevorzugter Ausführungsform weist der Körper (1) in seinem oberen Bereich einen mit einem Außengewinde versehenen Bereich (6) auf.

Es ist weiterhin bevorzugt, dass der Körper (1) zwischen dem unteren und dem oberen Bereich einen mittleren Bereich (7) aufweist, der eine Angriffsfläche für ein Werkzeug bildet. Der untere, mittlere und obere Abschnitt sind bevorzugt achsgleich zueinander und achsgleich mit der Längsachse der Stromkontaktdüse. In weiterhin bevorzugter Weise ist achsgleich mit der Längsachse ein durch den Körper (1) der Stromkontaktdüse gehender Kanal (2), der auch als Bohrung bezeichnet wird, ausgebildet. Dieser ist bevorzugt am oberen Ende trichterartig erweitert. Der Kanal besitzt in bevorzugter Weise einen Durchmesser von 0,5 bis 4,5 mm, besonders bevorzugt einen Durchmesser von 1 - 2 mm.

Die Erfindung wird im Folgenden anhand der Figuren näher erläutert:

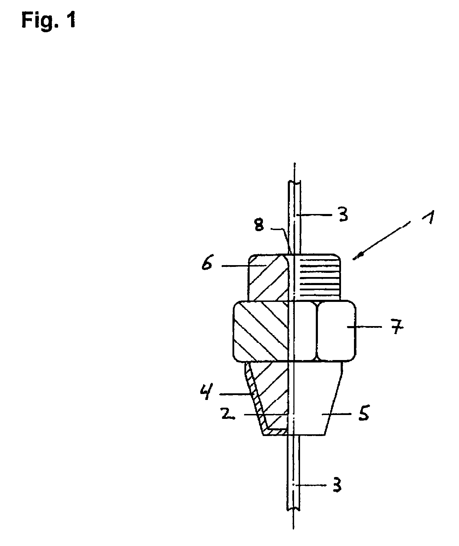

Figur 1 zeigt eine vereinfachte Darstellung der erfindungsgemäßen Stromkontaktdüse im Schnitt. Die Stromkontaktdüse besteht im Wesentlichen aus dem Körper (1). Dieser wird im unteren Bereich von einem, sich an der Außenfläche nach unten hin kegelförmig verjüngenden Abschnitt (5) gebildet und an seinem oberen Bereich weist er einen, mit einem Außengewinde versehenen Bereich (6) auf. Zwischen beiden Bereichen ist ein Bereich (7) vorgesehen, der eine Angriffsfläche für ein Werkzeug bildet. In Figur 1 ist diese Angriffsfläche als Sechskant für einen Schraubenschlüssel ausgeführt.

Die Stromdüse ist aus Grafitmaterial hergestellt. Die Herstellung kann aus einstückigem Grafitmaterial durch spanende Bearbeitung erfolgen. Weiterhin ist es aber auch möglich, die Stromdüse aus Grafitpulver zu pressen.

Der obere Abschnitt (6), der mittlere Abschnitt (7) und der untere Abschnitt (5) sind achsgleich miteinander und achsgleich mit der Längsachse der Stromdüse (1) angeordnet. Die Stromdüse weist einen durchgehenden Kanal (2) auf, der achsgleich mit der Längsachse der Stromkontaktdüse angeordnet ist. Dieser Kanal (2) erweitert sich am oberen Ende der Stromkontaktdüse (8) trichterartig.

Die Stromkontaktdüse wird eingesetzt in einer Elektroschweißvorrichtung, an der beispielsweise ein zinkhaltiger oder zinnhaltiger Draht als Schweißzusatz (3) eingesetzt wird. Dieses Schweißzusatz (3) ist durch den Kanal (2) der Stromdüse hindurchgeführt und über die elektrisch leitende Stromdüse 1 mit einem Pol, der den Schweißstrom liefernden Vorrichtung verbunden. Der andere Pol, der den Schweißstrom liefernden Vorrichtung ist mit dem Schweißgut oder mit einer, das Schweißgut aufnehmenden Auflage verbunden. Die Stromkontaktdüse ist in der Elektroschweißvorrichtung in einer Schutzgasdüse angeordnet, wie sie beispielsweise beschrieben wird in der DE 100 44 764.

Die Stromkontaktdüse hat somit zwei Funktionen: Einerseits dient sie als elektrische Verbindung zu dem sich durch die Düse bewegenden Lotmaterial (3), weiterhin besteht ihre Funktion darin, die Führung des Lotdrahtes auf die zu verschweißenden Stellen zu ermöglichen.

Wie vorstehend bereits beschrieben wurde, besteht die Möglichkeit, dass nur der Körper der Stromkontaktdüse im Bereich des Kanals (2) aus Grafit oder grafitähnlichem Bornitrit besteht. In einer bevorzugten Ausführungsform besteht der gesamte Körper der Stromkontaktdüse aus Grafit oder grafitähnlichem Bornitrit

In einer weiteren alternativen Ausführungsform ist es möglich, die Stromkontaktdüse so auszuführen, dass sie im Bereich des Kanals oder im Bereich der Wandung des Kanals aus Grafit besteht. Es kann dann die Außenfläche der Stromdüse im Bereich des unteren Abschnitts (5) an der Außenfläche ebenfalls mit einer Grafitbeschichtung, in der Zeichnung als Ziffer 4 angedeutet, versehen sein. Diese Grafitbeschichtung dient als Schutz gegen das Haftenbleiben von Materialen, welche beim Schweißen verspritzt werden. Insbesondere wird dadurch verhindert, dass am unteren Ende der Stromkontaktdüse ein Verschweißen des Lotmaterials mit der Oberfläche der Stromkontaktdüse erfolgt und dadurch eine Blockierung der Führung des Lotdrahtes durch die Stromkontaktdüse. Es ist weiterhin vorteilhaft, dass durch den Abrieb des Schweißzusatzes (3) an der inneren Oberfläche des Kanals (2) die Leitfähigkeit der Stromdüse noch verbessert wird.

Die erfindungsgemäße Stromkontaktdüse ermöglicht es erstmals, Schutzgasschweiß- und Schutzgaslötverfahren mit weichen Zusatzwerkstoffen in einem kontinuierlichen industriellen Prozess durchzuführen. Durch den Unterschied zu den bisher verwendeten Stromkontaktdüsen können die Bohrungen in der erfindungsgemäßen Stromkontaktdüse aufgrund der geringeren Wärmedehnung des Grafits enger toleriert werden. Weiterhin ist auch die Stromübertragung verbessert und Spritzer, die an der Oberfläche des Grafits leicht ablösbar sind, behindern den Schweißprozess nicht. Durch den Einsatz von Grafit werden auch die Gleiteigenschaften des Drahtes im Kanal verbessert

Mit der erfindungsgemäßen Stromkontaktdüse können bei Schweißprozessen mit weichen Zusatzwerkstoffen gleichmäßige Schweißnähte ausgeführt werden, die die Qualitätsanforderungen der Automobilindustrie beim Karosseriebau in vollem Umfang erfüllen.

### Bezugszeichenliste

(1) Stromdüse
(2) Kanal, Bohrung
(3) Schweiß- oder Lotmaterial
(4) Grafitbeschichtung
(5) Unterer Abschnitt
(6) Oberer Abschnitt
(7) Mittlerer Abschnitt
(8) Trichterförmige Erweiterung des Kanals

## Patentansprüche

1. Stromkontaktdüse mit Mitteln zur Führung und Kontaktierung eines Schweißdrahtes zum Schutzgasschweißen oder Schutzgaslöten bestehend aus einem die Stromkontaktdüse bildenden Körper (1) und einem durch den Körper gehenden Kanal (2) zur Führung des Schweißdrahtes (3), **dadurch gekennzeichnet daß** der Körper der Stromkontaktdüse (1) vollständig aus Grafit oder grafitähnlichem Bornitrid besteht.

2. Stromkontaktdüse nach Anspruch 1 , **dadurch gekennzeichnet, dass** der Körper (1) in seinem unteren Bereich von einem sich nach unten hin kegelstumpfförmig verjüngenden Abschnitt (5) gebildet wird.

3. Stromkontaktdüse nach einem oder mehreren der Ansprüche 1 oder 2, **dadurch gekennzeichnet, dass** der Körper (1) in seinem oberen Bereich einen mit einem Außengewinde versehenen Bereich (6) aufweist.

4. Stromkontaktdüse nach einem oder mehreren der Ansprüche 1 bis 3, **dadurch gekennzeichnet, dass** der Körper (1) zwischen dem unteren und dem oberen Bereich einen mittleren Bereich (7) aufweist, der eine Angriffsfläche für ein Werkzeug bildet.

5. Stromkontaktdüse nach einem oder mehreren der Ansprüche 2 bis 4, **dadurch gekennzeichnet, dass** der untere, mittlere und obere Abschnitt achsgleich zueinander und achsgleich mit der Längsachse der Stromkontaktdüse sind.

6. Stromkontaktdüse nach einem oder mehreren der Ansprüche 2 bis 5, **dadurch gekennzeichnet, dass** achsgleich mit der Längsachse ein durch den Körper (1) der Stromkontaktdüse gehender Kanal (2) ausgebildet ist.

7. Stromkontaktdüse nach Anspruch 6, **dadurch gekennzeichnet, dass** sich der Kanal (2) am oberen Ende trichterartig erweitert.

8. Stromkontaktdüse nach einem oder mehreren der Ansprüche 1 bis 7, **dadurch gekennzeichnet, dass** der Kanal (2) einen Durchmesser von 0,5 bis 4,5 mm besitzt.

9. Stromkontaktdüse nach Anspruch 8, **dadurch gekennzeichnet, dass** der Kanal (2) einen Durchmesser von 1 bis 2 mm besitzt.

10. Verwendung der Stromkontaktdüse nach einem oder mehreren der Ansprüche 1 bis 9 zum Schutzgasschweißen oder Schutzgaslöten von weichen Zusatzstoffen auf Basis von Zink, Zinn, Aluminium oder Kupfer.

11. Verwendung nach Anspruch 10, **dadurch gekennzeichnet, dass** die Zusatzwerkstoffe zinkhaltige und/oder zinnhaltige Werkstoffe und Legierungen sind.

## Claims

1. A contact nozzle with means for guiding and contacting a welding wire for use in shielding gas welding or shielding gas brazing consisting of a body (1), forming said contact nozzle, and a channel (2), running through said body for guiding said welding wire (3), **characterized in that** said body of said contact nozzle (1) consists entirely of graphite or graphite-like boron nitride.

2. The contact nozzle according to claim 1, **characterized in that** said body (1), in its lower area, is formed of a section (5) that tapers towards the bottom in the shape of a truncated cone.

3. The contact nozzle according to one or more of claims 1 or 2, **characterized in that** said body (1), in its upper area, has a region (6) that is provided with a male thread.

4. The contact nozzle according to one or more of claims 1 to 3, **characterized in that** said body (1), between the lower and upper areas, has a middle portion (7) that forms a contact surface for a tool.

5. The contact nozzle according to one or more of claims 2 to 4, **characterized in that** the lower, middle and upper sections are coaxial to one another, as well as to the longitudinal axis of said contact nozzle.

6. The contact nozzle according to one or more of claims 2 to 5, **characterized in that** a channel (2) is formed, running through said body (1) of said contact nozzle and being coaxial to said longitudinal axis.

7. The contact nozzle according to claim 6, **characterized in that** said channel (2) widens toward the top in the shape of a funnel.

8. The contact nozzle according to one or more of claims 1 to 7, **characterized in that** said channel (2) has a diameter of 0.5 to 4.5 mm.

9. The contact nozzle according to claim 8, **characterized in that** said channel (2) has a diameter of 1 to 2 mm.

10. A use of said contact nozzle according to one or more of claims 1 to 9 for shielding gas welding or shielding gas brazing of soft filler materials that are based on zinc, tin, aluminum or copper.

11. The use according to claim 10, **characterized in that** said filler materials are materials and alloys that contain zinc and/or tin.

## Revendications

1. Buse de contact de courant comprenant des moyens servant à guider un fil de soudage et à établir un contact avec ce dernier aux fins du soudage ou du brasage sous gaz protecteur, constituée d'un corps (1) formant la buse de contact de courant et d'un canal (2) traversant le corps, servant au guidage du fil de soudage (3), **caractérisée en ce que** le corps de la buse de contact de courant (1) est entièrement constitué de graphite ou de nitrure de bore similaire au graphite.

2. Buse de contact de courant selon la revendication 1, **caractérisée en ce que** le corps (1) est formé, dans sa zone inférieure, par une section (5) se rétrécissant vers le bas de manière à présenter une forme de cône tronqué.

3. Buse de contact de courant selon l'une quelconque ou plusieurs des revendications 1 ou 2, **caractérisée en ce que** le corps (1) présente, dans sa zone supérieure, une zone (6) pourvue d'un filetage extérieur.

4. Buse de contact de courant selon l'une quelconque ou plusieurs des revendications 1 à 3, **caractérisée en ce que** le corps (1) présente, entre la zone inférieure et la zone supérieure, une zone centrale (7), qui forme une surface de prise pour un outil.

5. Buse de contact de courant selon l'une quelconque ou plusieurs des revendications 2 à 4, **caractérisée en ce que** la section inférieure, la section centrale et la section supérieure sont disposées de manière coaxiale les unes par rapport aux autres et sont disposées de manière coaxiale avec l'axe longitudinal de la buse de contact de courant.

6. Buse de contact de courant selon l'une quelconque ou plusieurs des revendications 2 à 5, **caractérisée en ce qu'**un canal (2) traversant le corps (1) de la buse de contact de courant est réalisé de manière coaxiale avec l'axe longitudinal.

7. Buse de contact de courant selon la revendication 6, **caractérisée en ce que** le canal (2) s'élargit au niveau de l'extrémité supérieure à la manière d'un entonnoir.

8. Buse de contact de courant selon l'une quelconque ou plusieurs des revendications 1 à 7, **caractérisée en ce que** le canal (2) présente un diamètre allant de 0,5 à 4,5 mm.

9. Buse de contact de courant selon la revendication 8, **caractérisée en ce que** le canal (2) présente un diamètre allant de 1 à 2 mm.

10. Utilisation de la buse de contact de courant selon l'une quelconque ou plusieurs des revendications 1 à 9 servant au soudage ou au brasage sous gaz protecteur d'additifs mous à base de zinc, d'étain, d'aluminium ou de cuivre.

11. Utilisation selon la revendication 10, **caractérisée en ce que** les additifs sont des substances et des alliages contenant du zinc et/ou contenant de l'étain.
